(19) Europäisches Patentamt
European Patent Office
Office européen des brevets

(11) Publication number: 0 067 625
B1

(12) **EUROPEAN PATENT SPECIFICATION**

(45) Date of publication of patent specification: 01.08.90

(51) Int. Cl.[5]: C 08 F 283/00, C 08 F 291/00, C 08 F 297/00

(21) Application number: 82302859.2

(22) Date of filing: 03.06.82

(54) **Polymerization process.**

(30) Priority: 05.06.81 US 270780

(43) Date of publication of application: 22.12.82 Bulletin 82/51

(45) Publication of the grant of the patent: 01.08.90 Bulletin 90/31

(84) Designated Contracting States: BE DE FR GB IT

(56) References cited:
EP-A-0 001 697
EP-A-0 040 524
DE-B-1 109 891
GB-A-1 136 751
US-A-4 145 248

(73) Proprietor: MONSANTO COMPANY
Patent Department 800 North Lindbergh Boulevard
St. Louis, Missouri 63167 (US)

(72) Inventor: Van Eenam, Donald Neil
767 Oak Valley Drive
Des Peres Missouri 63131 (US)

(74) Representative: Ernst, Hubert et al
Monsanto Services International S.A. Avenue de Tervuren 270/272
B-1150 Brussels (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

This invention relates to a polymerization process and more specifically to a process for initiating the polymerization of free-radical polymerizable monomers.

Normally a catalyst or initiator for a free-radical polymerization remains apart from the reaction in that it is not found in the final polymeric composition. This invention relates to a group of compositions that not only initiate polymerization reactions but also apparently enter into the polymerization reaction and modify the properties of final polymer obtained.

Typically a free radical polymerization initiator is a peroxide, a peracid, a per-ester or an azo derivative that is capable of generating free radicals from ethylenically unsaturated monomers. The molecule does not take part in the polymerization to the extent of becoming incorporated into the polymer molecule as a comonomer.

These initiators are highly active and sometimes dangerously unstable and need to be handled with great care. For this reason they are used under carefully controlled conditions.

One constraint on conventional initiators is that they are usually strongly inhibited by the presence of oxygen such that polymerization reactions have to be conducted in an inert atmosphere.

Conventional initiators have an activation temperature below which they are not very active so that free-radical polymerization reactions are conventionally carried out at elevated temperatures. Since such reactions are usually also exothermic it is necessary to equip polymerization vessels with elaborate temperature control facilities.

The initiators used in the present invention however are not only highly stable and highly reactive but they have the capacity actually to enter into a copolymerization reaction with the ethylenically-unsaturated, free-radical-polymerizable monomer and so produce copolymers that can be tailored to the desired end use. In addition the initiators are very active even at room temperature so that the reaction mixture need not be heated.

A further advantage is that, unlike conventional initiators, they function as oxygen scavengers and so work effectively in the presence of oxygen. Elaborate closed reaction vessels are not therefore required.

It is recognized that often it is advantageous to operate in the absence of air so as to reduce color body formation and to maximise structural uniformity. The initiators of the invention are even more effective in the absence of air and permit ready access to these same advantages.

British Patent 1.136.751 describes a process for the preparation of a partially polymerised composition wherein a compound containing two or more beta, gamma-unsaturated ether groups is treated with free oxygen-containing gas to introduce oxygen containing groups therein and is concurrently or subsequently reacted with a polymerisable ethylenically unsaturated monomer at a temperature greater than 50°C and/or in the presence of a metal drier salt, thereby generating free radicals on the compound containing beta, gamma-unsaturated ether groups and causing polymerization of the ethylenically unsaturated compound therewith. When applied as coatings these partially polymerised compositions polymerise further and provide hard through-dried films on exposure to an oxygen-containing atmosphere in the presence of a drier metal salt as catalyst. It is preferred to employ from 0.03 to 0.4 gm. moles of the ethylenically unsaturated monomer for each 100 gms. of the compound containing beta, gamma-unsaturated ether groups.

## Description of the Invention

The present invention provides a process for the polymerization of an ethylenically-unsaturated, free-radical polymerizable monomer composition which comprises:

A. incorporating therein an oxidative prepolymerizate of an oxidatively polymerizable compound, said compound having at least two unsaturations which are each beta, gamma to strongly electron-donating groups activating the unsaturations towards oxidative polymerization; and

B. activating the oxidative prepolymerizate towards free-radical copolymerization with the monomer composition,

characterised in that the free-radical polymerizable monomer is present is an amount from 3 to 10 gram-moles per 100 grams of the oxidative prepolymerizate and the free-radical copolymerization is carried to substantial completion.

## Oxidatively Polymerizable Compound

The process of oxidative polymerization is most widely known in the context of drying oils and alkyd based paints (which are generally long chain unsaturated acid triglycerides), and relates to a mechanism by which, in contact with air, certain molecules can cross-link. This occurs through initial formation of peroxide group intermediates which then decompose to form cross-link sites between the molecules. It has also been described in terms of other molecules in an article by Alfrey and Price in Journal of Polymer Science, Vol. 2, page 101, (1947). The authors describe a term of "Q value" which indicates the reactivity of the molecule. The lower the Q value, the more ready the molecule is to undergo oxidative polymerization as opposed to free-radical vinyl polymerization.

In general monomers suitable for oxidative polymerization to produce oxidative prepolymerizates useful in the process of the invention have Q values below 0.3 and preferably below 0.1. Examples of

suitable monomers with their corresponding Q values are (o-, m- or p-) diallyl phthalate, 0.044; dimethallyl oxalate, 0.038; and triallylisocyanurate, 0.011.

Readiness to undergo oxidative polymerization is also demonstrated by the prepolymers described in USP 4,145,248 which are further described below and which provide the preferred oxidative prepolymerizates used in the process of the invention.

An oxidative prepolymerizate of an oxidatively polymerizable compound (monomer or prepolymer as indicated above) is obtained by a process in which oxygen is bubbled through the compound (if a liquid), or its solution at a temperature that is preferably below 30°C. This is continued until a significant proportion of hydroperoxide groups have been generated. The presence of hydroperoxide groups can be readily detected by addition of acidified, solvent-soluble iodide ion which is directly converted to iodine giving a yellow/brown coloration.

The formation of the oxidative prepolymerizate is usually accompanied by an increase in viscosity since the hydroperoxide groups begin slowly to decompose and generate cross-links as soon as they are formed. Usually therefore the oxidative prepolymerizate will have a Gardner viscosity at 25°C of at least M and preferably higher, for example R/S or even higher. It is however desirable that the oxidative prepolymerizate be readily miscible with the free-radical polymerizable monomer and this puts a practical limitation on the viscosity that can be employed.

While oxidative prepolymerizates based on oxidatively polymerizable monomers are not excluded, those that tend to be the more effective in practice are oxidative prepolymerizates derived from air-bodying of compounds of the type described in USP 4,145,248. These are polymers (which may be termed "prepolymers" to accord with the use of the term "oxidative prepolymerizates" to describe the result of air-bodying such polymers) having a backbone comprising at least one segment with the formula:

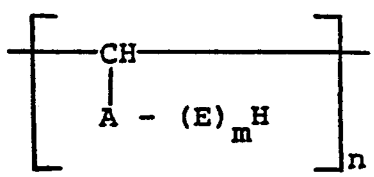

[I]

where A is a moiety terminating in the residue of an active hydrogen-containing group selected from the group consisting of alcoholic hydroxyl, thiol, amide, carboxylic acid and secondary amine with an active hydrogen removed. E is a moiety containing a radical having an activated olefinic unsaturation β,γ to the activating group n is the number of adjacent (as the term is hereinafter defined) segments having this formula, and n and m are integers and are each at least 1, provided that where one is less than 4 the other is at least 4.

The prepolymers described in that patent can have a plurality of adjacent segments of the above formula and by "adjacent" is meant that they are directly connected through a carbon-carbon bond or are indirectly connected through a

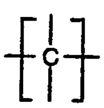 , 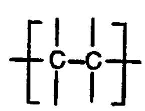 or 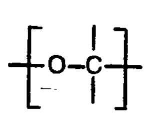

group or an oxygen or sulfur atom.

The high activity of the prepolymers depends to a large extent on the provision of a plurality of activated double bonds in blocks which are spatially closely related. These double bonds are sites at which oxygen-initiated crosslinking takes place during the drying or accelerated or natural aging operation. Thus, the provision of blocks of activated double bonds each of which can provide a bond site, increases the structural strength of the crosslinks that form both inter- and intramolecularly during drying and/or aging.

The double bonds are activated, by which is meant that by virtue of their proximity in the prepolymer molecular to other strongly electron-donating groups they are more ready to form crosslinks during the air drying process. Examples of such electron-donating groups include ether, sulfide, hydroxyl, carboxyl, and olefinically unsaturated group. The preferred electron-donating group is an ether group.

These prepolymers are usually hydrophilic, though hydrophilicity is not an essential characteristic of the oxidative prepolymerizates useful in the present invention. A hydrophobic polymer such as a drying oilbased paint causes the water to run off or form discrete droplets on a treated surface which, in effect, is waterproofed. A hydrophilic polymer on the other hand, allows the surface to become wetted and, if of a porous material, allows the water to be absorbed into the material by a "wicking" effect.

Qualitatively, the term "hydrophilic" polymer is understood to describe a polymer that can be applied to an unmodified cellulosic substrate without causing water applied to the treated substrate to run off or form discrete droplets. In other words, the polymer does not destroy the power of the substrate to absorb water or to be wetted by it.

Quantitatively, it is found that hydrophobic polymers have surface energies of about 40 dynes or less (water has a surface energy of 72 dynes).

The prepolymers can be formed by the reaction of a compound having an activated double bond and epoxy group with a molecule having a plurality of active hydrogen-containing groups selected from alcoholic hydroxyl, thiol, amide and carboxylic acid and secondary amine groups. Where it is also desirable that the polymer be hydrophilic it is often preferred that hydroxyl groups should provide the active hydrogen-containing groups. The prepolymer should not contain primary or secondary amine groups or phenolic hydroxyl groups since such groups interfere with the drying reaction.

The prepolymers can for example, be prepared by the reaction of a backbone compound having at least one and preferably from 1 to 6 moieties containing active hydrogen-containing groups with a compound containing both an epoxide group and an activated double bond in proportions such that from 1 to 20 epoxide radicals are provided for each active hydrogen-containing group on the backbone compound and the polymer produced has at least one block of at least four adjacent activated double bonds.

Alternatively, the prepolymer can be formed from a polymer chain having a plurality of adjacent pendant hydroxyl groups, reacted with, for example, allyl chloride using the techniques of Williamson's ether synthesis. Alternatively, the same Williamson synthesis technique may be employed using a polymer chain with pendant halogen atoms and an unsaturated alcohol such as allyl alcohol. This results in the generation of adjacent allyloxy groups pendant from the prepolymer backbone that can form a suitable block of unsaturation conferring the desired air-drying characteristics on the prepolymer.

Yet another method by which the prepolymer may be prepared is by the Lewis acid promoted polymerization of vinyl allyl ether. This reaction is selective to the vinyl group and results in a chain of carbon atoms with an allyloxy group pendant from every other carbon atom.

There are, therefore, two basic types of prepolymer embraced by the formula (I) above. The first type comprises a backbone molecule with as little as one moiety containing an active hydrogen-containing group which is reacted with a compound containing an epoxy group and an activated terminal double bond in proportions such that there are at least four and preferably from 4 to 10 or even 20 epoxy groups per active hydrogen-containing group. As a simple example reacting 1 mole of glycol with 8 moles of allyl glycidyl ether produces a prepolymer having the average structure

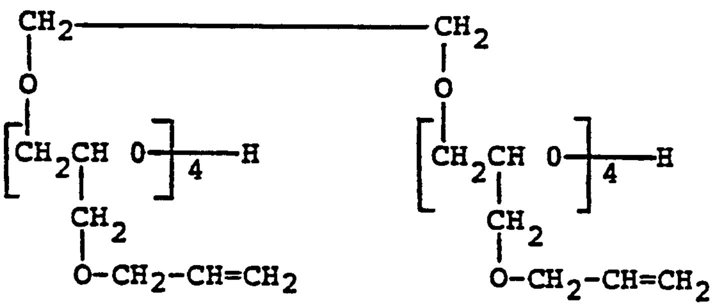

— thus providing two blocks of four adjacent activated allylic groups —
assuming of course, uniform addition at both sides. In this compound the moiety A in formula (I) is —O— and the moiety $[E]_m$ is

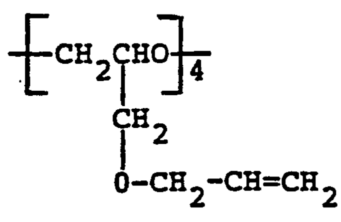

and has the double bond β,γ to the activating oxygen group.

The other type of structure is obtained for example, when the backbone molecule which comprises at least four adjacent active hydrogen-containing groups is reacted with an unsaturated epoxy compound as described above or alternatively, using Williamson's ether synthesis, with allyl chloride to produce a block of pendant allylic groups. In this case the ether oxygen provides the activation for the double bond in the allyl group and also the group "A". An example of such a prepolymer is that produced by the reaction of allyl chloride with polyglycidol to produce a prepolymer having structure with repeating units of the formula

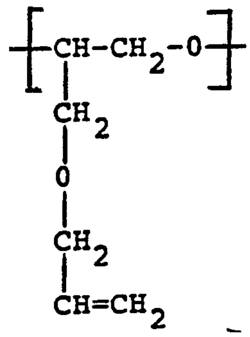

Here the moiety A in formula (I) is

$$-\!\left[CH_2O\right]\!- ,$$

the moiety E is

$$-\!\left[CH_2-CH=CH\right]\!-$$

and m is 1 and n is at least 4, the olefinic unsaturation is β,γ to the activating oxygen.

The backbone compound can therefore, be a polymeric polyol such as polyethylene glycol, polyglycerol, polyglycidol, polyvinyl alcohol, a partially hydrolyzed polyvinyl acetate, a styrene/allyl alcohol copolymer, poly(2-hydroxyethyl acrylate), poly(vinyloxy-ethanol), a monomeric polyol such as sorbitol, mannitol, or ethylene glycol; a monomeric alcohol such as allyl alcohol; the corresponding thiols; and dicarboxylic acids such as fumaric acid, maleic acid, malonic acid and phthalic acid. Also, compounds containing a mixture of radicals can be used such as hydroxy acids, which are compounds containing the carboxyl and hydroxyl radicals, hydroxy amides, hydroxy ethers, hydroxy esters, and the like. However, polyhydric alcohols having from 2 to 6 carbon atoms are preferred and sorbitol is especially preferred.

The epoxy compound reacted with the backbone compound comprises an epoxide group and an activated double bond.

The epoxy compounds that can be used have the general formula

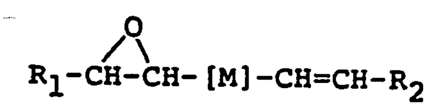

wherein M is absent or is a group capable of activating the double bond such as for example the following

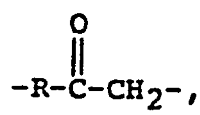, 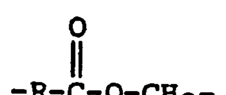, 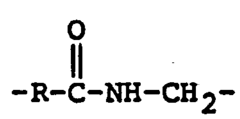, 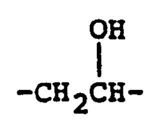

wherein R is a $C_1$ to $C_4$ alkylene group and $R_1$ and $R_2$ are each hydrogen or $C_1$ to $C_4$ alkyl groups. The corresponding episulfides may also be used.

It is important that the activating group does not comprise a moiety that will inhibit or deactivate the air-curing mechanism. Such disfavored groups include free primary and secondary amine, phenolic hydroxyl, and thiol groups.

Preferred compounds include allyl glycidyl ether, sorbyl glycidyl ether, butadiene monoxide and vinyl cyclohexene monoxide. The most preferred reactant which is also readily available at relatively low cost is allyl glycidyl ether.

An alternative preferred type of oxidative prepolymerizate is among those obtained by the process described in European Patent Publication No. A—0040524. The process therein described comprises passing oxygen through an oxidatively polymerizable monomer maintained at a temperature of 30°C or below, said monomer having a structure comprising at least two unsaturations, with no more than three of said unsaturations being beta, gamma to a group capable of activating the unsaturation towards oxidative polymerization and selected from the group consisting of —O—, —S—, —CON<, —COO—, >C=C<,

—SO.OH<, —SO.O— and >NCN, so as to polymerize the monomer oxidatively and raise the viscosity of the system to a desired level.

For the purpose of the present invention the monomer that is oxidatively polymerized by the above process comprises at least two groups with the formula $—Q—CH_2—CH=CH_2$ wherein Q is one of the activating groups indicated above, and is preferably an —O— group.

The group containing the activated unsaturation is usually a substituted or unsubstituted vinyl, or more preferably an allyl radical. It can, however, be a homolog of such groups. It is often useful to have the unsaturation that is beta, gamma to the activating group conjugated with another unsaturated group in the same chain.

Typical unsaturated groups include, for example: $—CH_2CH=CH_2$, $—CH_2—CH=CH—CH_3$ ("cis" and "trans" versions), $—CH_2—CH=C<$, $—CH_2C(CH_3)=CH_2$, and $—CH(CH_3)CH=CH_2$. Since the monomer comprises at least two or three such groups it is convenient to refer to them as di/tri olefinic monomers.

Preferred among the activating groups described above are —COO—, —O—, —S—, —CON<, >N.CN or an unsaturated group in which the activating unsaturation is conjugated with the activated unsaturation. Of course the same group can be used to "activate" several unsaturated bonds as for example in diallyl ether. The most effective activating groups are the ones that are most strongly electron donating such that the affected carbon-to-carbon unsaturations are most intensely "activated" toward air-curing chemistry.

The molecule need not contain only the groups and moieties indicated. Other non-interfering functional or non-functional groups such as ester, amide, nitrile, carboxylic acid, ketone, carboxyaldehyde, sulfonamide, and the like can be present in the molecule. Indeed, sometimes functional groups can be very significant in providing a monomer that will result in a polymer with an appropriate degree of hydrophilicity, polarity, and substantivity.

Very often, however, the preferred molecules are as simple as possible since these tend also to be relatively cheap. An excellent monomer starting material is 1,2-diallyloxy-ethane. Other possible monomers include 1,4-diallyloxy-2-butene, 1,3-diallyloxy-2-propanol, diallyl sulfide, β-vinyloxy ethyl allyl ether, diallyl succinate, diallyl maleate, diallyl fumarate, diallyl adipate, diallyl phthalate, triallyl cyanurate, triallyl isocyanurate, triallyl orthoformate and dimethallyl malonate.

## Formation of the Oxidative Prepolymerizate

The oxidative polymerization process is preferably carried out at temperatures of 50°C or lower such as from 5 to 30°C and preferably from 10°C to 25°C and can involve the prepolymer or monomer alone (either will conventionally be a liquid under normal conditions), or a solution or emulsion of the prepolymermonomer in a solvent.

The temperature of the reaction is found to be important in that low temperatures are required if reactive peroxy and hydroperoxy sites that are applicable to air-curing chemistry are to be obtained and accumulated in adequate numbers.

The time during which the oxygen is passed through the prepolymer/monomer depends largely on the rate at which oxygen is absorbed, that is, in effect, gas depression effectiveness, prepolymer/monomer reactivity, and the viscosity of the desired oxidative prepolymerizate. Often the time can be shortened by the presence of monomer/prepolymer-soluble metallic drier salts such as cobaltous acetate, cobaltous octoate, manganous acetate, and other salts or soluble chelates and complexes of transition metals that are known generically as "metallic driers" in the paint field. Organic peroxides such as benzoyl peroxide and similar hydroperoxides are also found to be effective either alone or in conjunction with tertiary amines (for peroxides) or with the metallic driers described above. Generally, from 0.001 to 5.0 percent by weight of such an additive or additive combination based on the prepolymer/monomer weight is found to be effective.

The oxygen can be supplied either as a pure gas or as a mixture with other inert gases such as, for example, air. In general, air is preferred even though the reaction may be longer than when a gas with a higher oxygen content is used. The oxygen partial pressure may be widely varied but in practice atmospheric pressure is usually found to be convenient. Conditions which favor oxygen dissolution such as sparging, agitation, stirring, dispersing, counter current mixing and the like will also speed oxidative polymerization.

The passage of oxygen is continued until, as a result of the oxidative polymerization, the desired "built" viscosity for the oxidative prepolymerizate is reached. This viscosity may be, for example, a Gardner viscosity at 25°C at least M and preferably from R/S to Z-4. A viscosity in this range may be reached in a matter of hours, days, or even weeks depending primarily on the reactivity of the monomers, the number of activated saturations in the molecule, the presence/absence of solvent, the reaction temperature, the presence/absence of metallic driers or other catalysts and the partial pressure of the oxygen in the reaction mixture.

It should be noted that the reaction conditions chosen are those which unmistakably lead to oxidative polymerization of the metallic drier-promoted, air-curing alkyd resin type, not that of vinyl (addition) polymerization typified by the styryl, acrylic/methacrylic, vinyl, etc. systems. The latter, as is known to those skilled in the art, occurs only in the presence of free radical producing additives (i.e. initiators) and near total absence of radical inhibitors — including, among others, free dissolved oxygen, hydroquinones and their derivatives, homologs, etc., phenols, mercaptans, quinones, and (poly) primary or secondary

amines. Since the oxidative polymerization reaction systems are continually sparged with air ($O_2$), the initial oxygen rich phase assures that the reaction will overwhelmingly be of the oxidative polymerization type.

Free Radical Polymerizable Composition

The other component of the copolymer of the invention is an ethylenically-unsaturated, free radical-polymerizable monomer or mixture of monomers. The nature of the molecule is not critical so long as it is activated towards free-radical polymerization via the double bond by free-radical moieties present in the oxidative prepolymerizate as a result of the oxidative polymerization process.

Suitable monomers include olefins such as cyclohexene, propylene and butylene; vinylaromatic monomers such as styrene, chlorostyrene, α-methyl styrene and vinyl toluene; vinyl derivatives such as vinyl acetate, vinyl chloride and acrylonitrile; and acrylic derivatives such as methyl methacrylate, ethyl acrylate and acrylamide.

Monomers that are polyfunctional are particularly preferred where fast reaction and a high degree of cross-linking is desired and the various polyfunctional acrylates that are available have many significant advantages. These include 1,3-butylene glycol diacrylate; 1,6-hexanediol diacrylate; polyethylene glycol 200 dimethacrylate; pentaerythritol tetracrylate; trimethylolpropane triacrylate; ethoxylated bisphenol A dimethacrylate; and dipentaerythritol monohydroxypentacrylate.

Monomers in which the free radical polymerizable group is or includes an allyl group or several allyl groups can also be used. Such monomers would include allyl esters and ethers of various types.

Mixtures of such monomers can be used to achieve any desired balance of properties in the final copolymer. Generally, however, it is preferable to select the monomers such that all can be brought together at room temperature to react. It is generally most convenient therefore if the reactants can be dissolved in a common solvent which is most preferably one of the reactants.

It is not however beyond the scope of this invention to provide that the reaction occurs in a suitable non-polymerizable solvent or that a gaseous reactant be contacted with the others in a multiphase reaction.

The Process

Activation of the reaction between the oxidative prepolymerizate and the free-radical polymerizable comonomer can take place without any outside agent being involved. Generally however this requires an elevated temperature of at least 60°C and often about 80°C before a reasonable reaction rate can be achieved. It is found however that the addition of minor amounts of a metallic drier of the oxidative prepolymerizate, is extremely beneficial.

Where the oxidative prepolymerizate is derived from the prepolymers described in USP 4,145,248 it is possible to add the prepolymer itself. This is because the prepolymer is able to take up oxygen from the air and form autogenously the oxidative prepolymerizate. Such a reaction is however usually too slow for most efficient use of the present invention.

The addition of from 0.001 to 1.0% by weight of a metallic drier markedly speeds up the copolymerization and enables rapid reaction to occur even at room temperature or lower. The metallic driers are salts and soluble complexes of transition elements such as cobalt and manganese and the typical representatives include cobaltous acetate, citrate, acetylacetonate and 2-ethyl hexanoate, and the corresponding soluble manganous salts and complexes. Generally salts are preferred to complexes since they appear to generate higher reaction rate. The metallic drier is usually added in the form of a solution in a suitable solvent that will ensure dispersion of drier throughout the reaction mixture.

The proportions of the components can be in the range of from 3 to 10 gram moles of the monomer per 100 grams of the oxidative prepolymerizate. In weight percentage terms the weight percentage of oxidative prepolymerizate can conveniently range from 2 to 30% of the combined monomer composition/oxidative prepolymerizate weight. The oxidative prepolymerizate is used as a catalyst for polymerizing the monomer, for example at room temperature without use of traditional free-radical generators. Such reactions are very useful since the reacting monomers can be selected such that the mixture with the oxidative prepolymerizate is a liquid that is relatively stable at ambient temperatures but which polymerizes within seconds on addition of a metallic drier. This promises a wide field of utility in adhesives, moldings and castings operations. These uses are particularly favored by the relative insensitivity of the system to the presence of oxygen which would normally inhibit free-radical reactions. In such an application the weight percentage of oxidative prepolymerizate would conveniently range from 1 to 25% of the combined monomer composition/oxidative prepolymerizate weight.

It will be noted that the use of the oxidative prepolymerizate as an initiator results in no by-products since the initiator is a polymer that is incorporated into the final product. Thus it is capable of acting as a genuine internal plasticizer or other property modifier.

The use of an oxidative prepolymerizate as an initiator is ideal for paints and adhesives in view of its relative insensitivity to air and temperature and because it leads to simultaneous drying throughout the mass, not merely at the surface initially with slower solidification of the body material.

Description of Preferred Embodiments

The invention is now described in more detail in the context of the following Examples which illustrate

various compositions and processes relating to the invention claimed.

Example 1

This Example describes the production of an oxidative prepolymerizate catalyst composition useful in the process of the invention.

A reaction vessel was charged with ethylene glycol which was reacted with allyl glycidyl ether in a 1:10 mole ratio in the presence of boron trifluoride/etherate catalyst. The allyl glycidyl ether was added gradually over a period of several hours and the liquid product obtained had a Gardner viscosity at 25°C of F.

Five hundred grams of this product were vacuum stripped, placed in a flask and air-sparged at 50°C for 54 hours. After this period the Gardner viscosity had increasd to Z-2. The resin was just pourable and was clear and colorless.

Example 2

This Example illustrates the process of the invention.

A glass tube was charged with 4.0 g of ethylene glycol dimethacrylate (containing about 50 to 100 ppm of hydroquinone as stabilizer) and 0.4 g of the oxidative prepolymerizate catalyst of Example 1. The two immiscible liquids were stirred for 30 seconds to effect homogeneity; then 0.025 g of a 12% cobaltous octoate solution in cyclohexane was added with stirring.

Within a minute the contents had begun to heat up, gel formed rapidly and within two minutes the tube was too hot to handle.

The product was hard, clear, quite brittle, insoluble in methanol, acetone, methyl ethyl ketone, toluene and various cellosolves and carbitols.

The reaction was used successfully to make castings and to adhere surfaces together. The presence of air made no difference to the efficacy of the reaction or the progress of the polymerization.

Example 3

This Example duplicates Example 2 with the substitution of methyl methacrylate for ethylene glycol dimethacrylate. A small quantity of the mixture obtained was spread as a moderately thick film on a stainless steel strip of metal and allowed to cure. The liquid became tacky after 15—20 minutes while remaining optically very clear. No signs of cracking, chipping or brittleness were observed after a three hour cure period.

The film had good adhesion to the metal surface and a hardness, as measured by ASTM Method D 3363—4, of HB/F after three (3) hours and better than 4H after a day. For purposes of comparison the oxidative prepolymerizate alone, activated by the cobalt catalyst was cast on a stainless steel strip. Even after six (6) hours from the point at which a film formed over the surface of the liquid, it had only a 2B hardness (measured by the above technique), and showed low adhesion to the stainless steel plate and poor toughness. It tended to break into crumbs when rubbed between the fingers.

It would appear therefore that a genuine copolymerization has occurred to produce a new copolymer.

Example 4

Example 2 was repeated with the difference that in exchange for the oxidative prepolymerizate of Example 1, there was substituted the precursor prepolymer obtained by reaction of allyl glycidyl ether with ethylene glycol. (Gardner viscosity at 25°C of F). Thus the difference lay in the omission of the air-bodying process that results in the production of the oxidative prepolymerizate.

It is known from the teaching in USP 4,145,248 that such prepolymers gradually pick up air and are oxidatively polymerized in situ in the same way but at a slower rate.

In confirmation of this expectation it was observed that the yellow/purple color associated with the cobaltous octoate catalyst slowly changed over 15 minutes to a khaki/green indicating oxidation state change of the metal. No rapid exotherm could be observed but after 70 minutes there was a slight increase in viscosity and after 2 hours 10 minutes the contents had set to a hard crosslinked casting.

Example 5

This Example illustrates the ineffectiveness of the cobaltous octoate catalyst per se or a benzoyl peroxide catalyst acting alone in the initiation of polymerization or inhibited methyl methacrylate.

Two samples of 4 g of methyl methacrylate, each containing 25—50 ppm of hydroquinone as inhibitor, were prepared.

Both samples were treated with 0.025 g of a 12% solution in cyclohexane of cobaltous octoate and the second sample additionally received 0.1 g of benzoyl peroxide. Both were left at room temperature in the presence of air for four (4) hours. Neither showed any evidence of reaction by increased viscosity.

Each sample was then treated with 0.4 g of the oxidative prepolymerizate of Example 1 stirred in at room temperature until a homogeneous liquid was obtained. Both produced a hard, tough, clear, solvent insoluble resin.

Example 6

This Example demonstrates the relative stability of methyl methacrylate monomer in the presence of the oxidative prepolymerizate when allowed to stand at room temperature in the presence of air but absence of the cobaltous salt.

A loosely capped vial containing 3 g of methyl methacrylate and 1 g of the oxidative prepolymerizate of Example 1 was stirred until the solution was homogeneous and left at room temperature. No change in viscosity was observed after 24 days.

However within 30 minutes of the addition of 0.012 g of 12% cobaltous octoate the contents had polymerized to a hard tough casting.

Example 7

This Example demonstrates that the molecular weight of the oxidative prepolymerizate is not a major factor in determining the course or result of the reaction.

Example 1 was repeated with the difference that air-sparging was discontinued after 72 hours when the Gardner viscosity at 25°C was R/S.

This oxidative prepolymerizate was used in a repeat of Example 2 with essentially identical results.

Example 8

In this Example a number of catalysts were evaluated for their activity in initiating polymerization of a mixture of 4.0 g of methyl methacrylate; 0.4 g of ethylene glycol dimethacrylate and 0.5 g of the oxidative prepolymerizate of Example 1. All reactions were run in loosely-capped 2-dram vials and were allowed to proceed to rigid castings.

In each case 0.010 to 0.012 g of (as supplied) metallic drier composition was added to the above mixture.

It was found that cobaltous and cobaltic salts (the acetates, octanoates, 2-ethylhexanoates, naphthenates and tollates) promote extremely fast polymerizations. These salts are also known to promote rapid gelation of the oxidative prepolymerizates alone.

On the other hand the corresponding largely covalent acetylacetonates (chelates) are comparatively slow reacting catalysts.

Example 9

This Example demonstrates the effectiveness of another type of oxidative prepolymerizate in the process of the invention.

Trimethylolpropane diallyl ether was oxidatively polymerized by sparging with air at 70°C for 68.5 hours to a Gardner viscosity at 25°C of Z-4. No cobalt catalyst was used.

A homogeneous mixture was prepared by stirring together 0.5 g of the above oxidative prepolymerizate and 5.0 g of ethylene glycol dimethacrylate. To this solution was added 0.015 g of a 12% solution in cyclohexane of cobaltous 2-ethylhexanoate and the solution was quickly mixed.

In 270 seconds the mixture had gelled and had formed a hard casting after about 400 seconds.

By comparison, when the oxidative prepolymerizate of Example 1 was used in the same reaction the gel time was 25 seconds and the hard casting was formed in 35—40 seconds. This difference probably reflects the greater number of potential polymerization sites in the latter oxidative prepolymerizate.

Example 10

This Example illustrates the effectiveness of the process of the invention with vinylaromatic monomers such as styrene.

A mixture was prepared of 4.0 g of inhibited styrene monomer (commercial styrene conventionally contains an inhibitor to prevent autogenous or premature reaction), and 0.4 g of the oxidative prepolymerizate of Example 1. The mixture was thoroughly mixed and nitrogen-sparged for 15 minutes before the introduction of 0.0125 g of a 12% solution in cyclohexane of cobaltous octanoate.

The mixture gelled after 45 minutes and set to a hard brittle casting after 90 minutes.

Example 11

This Example illustrates the process of the invention applied to various vinyl and allyl monomers.

A series of three (3) reaction mixtures was prepared. Each contained 1 g of ethylene glycol dimethacrylate and 0.25 g of the prepolymerizate of Example 1 and the monomer indicated in Table 1 below. Each reaction was conducted at room temperature with nitrogen sparging until after the addition of 0.02 g of a 6% solution of cobaltous naphthenate. The times for each to gel and to set to a hard casting were recorded.

TABLE 1

| Monomer | Gel Time | Reactions Times Hard Casting |
|---|---|---|
| Diallyl phthalate | 2.25 min. | 5.33 min. |
| Vinyl acetate | 3.75 min. | approx. 15 min. |
| Triallyl Isocyanurate | 1.17 min. | 2.0 min. |

Example 12

This Example illustrates the importance of ensuring that the catalyst is supplied in the appropriate phase.

An emulsion was made of 4.0 g of ethylene glycol dimethacrylate, 4.3 g of deionized water and 0.3 g of the oxidative prepolymerizate of Example 7 (Gardner viscosity at 25°C of R/S) by shaking the mixture with approx. 0.005 g of an alkyl aryl polyether-alcohol detergent. Four drops of a 5.0% aqueous solution of cobaltous acetate tetrahydrate were added with swirling of the container. The container was then allowed to sit for 15 minutes during which time no exotherm or viscosity rise was observed.

A 12% solution of cobaltous 2-ethyl hexanoate (0.012 g) was then added with stirring and after 30 seconds, during which the newly added catalyst appeared to dissolve in the organic phase, a rapid exothermic reaction was observed and a hard casting was obtained. Water was converted to steam which was then evolved from the mixture.

A comparison of this result with that of Example 7 indicates that supply of the catalyst in an aqueous phase is ineffective unless it can be persuaded to enter the organic phase comprising the monomer and the oxidative prepolymerizate.

This could take place for example if an aqueous phase were to be gradually removed from an emulsion either by evaporation or by absorption into a substrate. This then indicates a valuable means of delaying reaction until a desired condition is reached.

Example 13

This Example illustrates the retardant effect of oxygen on the polymerization rate of the process of the invention.

In each of the following runs the monomer was a 10:1 by weight mixture of methyl methyacrylate and ethylene glycol dimethacrylate. The oxidative prepolymerizate was that obtained in Example 1. The gas indicated was sparged through the reaction mixture for the duration of the reaction until the mixture had gelled. All runs were performed at room temperature in screw capped glass tubes. The results are set forth in Table 2.

TABLE 2

| Run | Sparging Gas | Catalyst (pts) | Monomer (pts) | Oxidative Prepoly-merizate (pts) | Gel Time | Casting Time |
|---|---|---|---|---|---|---|
| 1 | Air | Co. octoate (0.0125) | 4 | 1 | 55 sec. | 90 sec. |
| 2 | Nitrogen | Co. octoate (0.0125) | 4 | 1 | 10—15 sec. | 30 sec. (approx.) |
| 3 | Air | Co. acetylacetonate (0.0125) | 4 | 1 | 30 mins. | 5 hrs. (approx.) |
| 4 | Nitrogen | Co. acetylacetonate (0.0125) | 4 | 1 | 35 sec. | 60 sec. (approx.) |
| 5 | Air | Co. acetylacetonate (0.0125) | 4 | None | 7 days | — |
| 6 | Nitrogen | Co. acetylacetonate (0.0125) | 4 | None | approx. 3 days | — |
| 7 | Air | Co. acetylacetonate (0.0125) plus t-butyl hydroperoxide (1.00) | 4 | None | 2+ days | — |

The above runs show clearly that although oxygen is a clear inhibitor of free-radical polymerization reactions, the oxidative prepolymerizate is able, in effect, to remove it from the reaction when operating in its oxidative prepolymerization mode and generate the catalytic entities that permit the free-radical copolymerization of the reaction mixture.

Run #7 shows clearly that even an active conventional hydroperoxide catalyst is comparatively ineffective in the presence of air to effectuate polymerization.

Example 14

This Example investigates the effect of temperature on a typical copolymerization reaction. The results should be compared with those from Examples 2 to 13 which were all conducted at room temperature.

In each of the following runs the oxidative prepolymerizate was that from Example 1 and the monomer was ethylene glycol dimethacrylate. The catalyst was cobalt acetylacetonate charged at 0.20% based on total reactant weight.

The weight ratio of monomer to oxidative prepolymerizate was 95:5. The results are set forth in Table 3.

TABLE 3

| Run | Polym. Conditions | Temperature | Gel | Hard Casting |
|---|---|---|---|---|
| 1 | Air present-catalyst | 70—75°C | 5—7 mins. | 10 mins. |
| 2 | $N_2$ sparged-catalyst | 70—75°C | 10—15 sec. | 60 sec. |
| 3 | $N_2$ sparged-no catalyst | 95—100°C | 13.5 mins. | approx. 30 mins. |

For purposes of comparison, the monomer polymerization was initiated at 90—95°C in the presence of air using a) 5.0 wt.%, and b) 15.0 wt.% of benzoyl peroxide dissolved in warm monomer. In the first case no polymer was formed even after two days but the solution color had changed to a bright yellow. In the

second, rapid polymerization began after 6.0 minutes and a hard white casting was obtained after 7.0 minutes.

From the above it can be seen that the prepolymerizate, even acting without the cobalt salt, is an effective polymerization initiator at elevated temperatures. There is also clear evidence of the retardant effect of oxygen on the polymerization reaction.

Example 15

This Example illustrates the use of the copolymerizate of the reaction as an adhesive.

A mixture of 5.0 g of ethylene glycol dimethacrylate and 0.5 g of the oxidative prepolymerizate of Example 1 was stirred till a homogeneous solution was obtained. A 12% solution of cobaltous 2-ethylhexanoate was added, quickly mixed (along with air), and the reaction mixture quickly poured in roughly equal amounts onto flat, dry, clean surfaces of two plywood blocks. The blocks were then clamped together for 1.0 minute. The whole reaction was conducted at room temperature. While much of the curing probably occurs in the first 6—8 hours under these conditions, it is possible that full cure is not reached for 1—2 days. The cured composite withstands mechanical shock and twisting forces without bond-rupture.

Example 16

This Example illustrates the utility of an oxidative prepolymerizate of the kind described in Example 9 in the formulation of an adhesive composition.

A mixture of 2.5 g of n-butyl acrylate, 2.5 g of Carbowax 200 dimethacrylate and 0.5 g of the oxidative prepolymerizate based on trimethylol propane diallyl ether (oxidatively polymerized as described in Example 9), was stirred until homogeneous.

A 12% solution of cobaltous 2-ethyl hexanoate in cyclohexane (0.012 g) was added and quickly stirred into the reaction mixture. This mixture was then applied to blocks of plywood as described in Example 15. A firm strong bond was obtained even at room temperature.

The above examples are for the purpose of illustration only and are not intended to imply any necessary limitation on the inherent scope of the invention. It will be appreciated that many minor modifications to, or variations in, the formulations and processes described above could be made without departing from the essential scope of the invention. It is intended that all such modifications and variations should be embraced within the purview of this invention.

**Claims**

1. A process for the polymerization of an ethylenically unsaturated free-radical polymerizable monomer composition which comprises:

A) incorporating therein an oxidative prepolymerizate of an oxidatively polymerizable compound having at least two unsaturations which are each beta, gamma to a strongly electron-donating group activating the unsaturation towards oxidative polymerization, and

B) activating the oxidative prepolymerizate towards free-radical copolymerization with the monomer composition,

characterised in that the free-radical polymerizable monomer is present in an amount from 3 to 10 gram-moles per 100 grams of the oxidative prepolymerizate and the free-radical copolymerization is carried to substantial completion.

2. A process according to Claim 1, in which the prepolymerizate is present in an amount that represents from 1 to 25% of the combined monomer/oxidative prepolymerizate weight.

3. A process according to Claim 1 or Claim 2, in which the oxidatively polymerizable compound is a prepolymer having at least one unit represented by the formula:

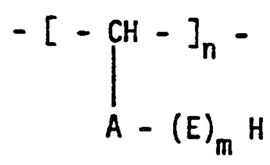

wherein A is a moiety terminating in the residue of an active hydrogen-containing group selected from the group consisting of alcoholic hydroxyl, thiol, amide, carboxylic acid and secondary amine with an active hydrogen atom removed, E is a moiety containing a radical having an activating olefinic unsaturation beta, gamma to the activating group, m and n are integers and where either is less than 4 the other is at least 4.

4. A process according to Claim 3, in which the oxidatively polymerizable prepolymer is the reaction product of a polyol with allyl glycidyl ether.

5. A process according to either Claim 1 or Claim 2, in which the oxidatively polymerizable compound has a structure comprising at least two groups with the formula $—Q—CH_2—CH{=}CH_2$ wherein Q is selected from the group consisting of —O—, —S—, —CON<, —COO—, and >NCN.

6. A process according to any one of Claims 1 to 5, in which up to 1% by weight of a metallic drier salt is

added to the composition to initiate free-radical polymerization.

7. A process according to any one of Claims 1 to 6, in which the copolymerization takes place under oxygen-free conditions.

8. A process for the polymerization of an ethylenically unsaturated free-radical polymerizable monomer composition, which comprises:

A) incorporating therein from 2 to 30% based on the combined weights of an oxidative prepolymerizate obtained by contacting the reaction product of a polyol and sufficient allyl glycidyl ether to provide at least four allyloxy groups per hydroxyl group on the polyol with air; and

B) activating the oxidative prepolymerizate toward free-radical copolymerization with the monomer composition using a cobalt drier salt in oxygen-free conditions.

**Patentansprüche**

1. Verfahren zur Polymerisation einer freiradikalisch polymerisierbaren, ethylenisch ungesättigten Monomer-Masse, welches darin besteht:

(A) ein oxidatives Vorpolymerisat einer oxidativ polymerisierbaren Verbindung mit mindestens zwei Unsättigungen, die jeweils in β,γ-Stellung zu einer starken Elektronendonorgruppe stehen, welche die Unsättigung bezüglich der oxidativen Polymerisation aktiviert, einarbeitet und

(B) das oxidative Vorpolymerisat bezüglich der freiradikalischen Copolymerisation mit der Monomer-Masse aktiviert,

dadurch gekennzeichnet, daß das freiradikalisch polymerisierbare Monomer in einer Menge von 3 bis 10 Gramm-Mol pro 100 g des oxidativen Vorpolymerisats vorhanden ist und die freiradikalische Copolymerisation im wesentlichen vollständig durchgeführt wird.

2. Verfahren nach Anspruch 1, worin das Vorpolymerisat in einer Menge vorhanden ist, die 1 bis 25% des Gesamtgewichts von Monomer und oxidativem Vorpolymerisat entspricht.

3. Verfahren nach Anspruch 1 oder 2, worin die oxidativ polymerisierbare Verbindung ein Vorpolymerisat ist, welches mindestens eine Einheit der folgenden Formel

$$-[-\underset{\displaystyle A-(E)_m H}{\underset{|}{CH}}-]_n-$$

aufweist, in der A ein Rest ist, der in dem Rest einer ein aktives Wasserstoffatom enthaltenden Gruppe endet, welche aus der Gruppe ausgewählt ist, die alkoholische Hydroxyl-, Thiol-, Amid-, Carbonsäure- und sekundäre Amin-Gruppen, aus denen ein aktives Wasserstoffatom entfernt worden ist, umfaßt, E für einen Rest steht, der eine Gruppe enthält, die eine aktivierende olefinische Unsättigung in β,γ-Stellung zu der aktivierenden Gruppe aufweist, und m und n ganze Zahlen darstellen, von denen die eine weniger als 4 und die andere mindestens 4 beträgt.

4. Verfahren nach Anspruch 3, worin das oxidativ polymerisierbare Vorpolymerisat das Reaktionsprodukt eines Polyols mit einem Allylglycidylether ist.

5. Verfahren nach entweder Anspruch 1 oder 2, worin die oxidativ polymerisierbare Verbindung eine Struktur aufweist, die mindestens zwei Gruppen der Formel $-Q-CH_2-CH=CH_2$ umfaßt, worin Q aus der Gruppe ausgewählt ist, die Gruppen der Formeln $-O-$, $-S-$, $-CON<$, $-COO-$ und $>NCN$ umfaßt.

6. Verfahren nach einem der Ansprüche 1 bis 5, worin biz zu 1 Gew.-% eines metallischen Trocknersalzes zu der Masse zugesetzt wird, um die freiradikalische Polymerisation zu initiieren.

7. Verfahren nach einem der Ansprüche 1 bis 6, worin die Copolymerisation unter sauerstofffreien Bedingungen durchgeführt wird.

8. Verfahren zur Polymerisation einer freiradikalisch polymerisierbaren, ethylenisch ungesättigten Monomer-Masse, welches darin besteht,

(A) bezogen auf das Gesamtgewicht, 2 bis 30% eines oxidativen Vorpolymerisats zuzusetzen, welches dadurch erhalten worden ist, daß man das Reaktionsprodukt eines Polyols und einer solchen Menge Allylglycidylether, das mindestens 4 Allyloxygruppen pro Hydroxylgruppe an dem Polyol zur Verfügung stehen, mit Luft in Kontakt bringt; und

(B) das oxidative Vorpolymerisat bezüglich der freiradikalischen Copolymerisation mit der Monomer-Masse unter Verwendung eines Kobalt-Trocknersalzes unter sauerstofffreien Bedingungen zu aktivieren.

**Revendications**

1. Procédé pour la polymérisation d'une composition de monomère éthyléniquement insaturé et polymérisable en présence de radicaux libres qui comprend:

A) l'incorporation à cette composition d'un prépolymérisat obtenu par oxydation d'un composé polymérisable par oxydation ayant au moins deux insaturations qui sont chacune en béta, gamma par

rapport à un groupe fortement donneur d'électrons activant l'insaturation envers la polymérisation par oxydation, et

B) l'activation du prépolymérisat obtenu par oxydation envers une copolymérisation en présence de radicaux libres avec la composition de monomère, caractérisé en ce que le monomère polymérisable en présence de radicaux libres est présent en une quantité comprise entre 3 et 10 molécules-grammes pour 100 grammes de prépolymérisat obtenu par oxydation et en ce qu'on amène la copolymérisation en présence de radicaux libres pratiquement à son terme.

2. Procédé selon la revendication 1, dans lequel le prépolymérisat est présent en une quantité qui représente de 1 à 25% des poids combinés du monomère et du prépolymérisat obtenu par oxydation.

3. Procédé selon la revendication 1 ou la revendication 2, dans lequel le composé polymérisable par oxydation est un prépolymère ayant au moins un motif répondant à la formule:

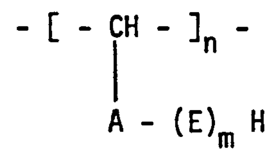

dans laquelle A représente un motif terminal dans le reste d'un groupe contenant un atome d'hydrogène actif choisi dans le groupe constitué par un groupe hydroxy alcoolique, thiol, amide, acide carboxylique et amine secondaire auquel on a retiré un atome d'hydrogène actif, E représente un motif contenant un radical ayant une insaturation oléfinique activante en béta, gamma par rapport au groupe activant, m et n représentent des nombres entiers et si l'un est inférieur à 4 l'autre est au moins égal à 4.

4. Procédé selon la revendication 3, dans lequel le prépolymère polymérisable par oxydation est le produit de réaction d'un polyol avec l'éther d'allyle et de glycidyle.

5. Procédé selon la revendication 1 ou la revendication 2, dans lequel le composé polymérisable par oxydation présente une structure comprenant au moins deux groupes répondant à la formule $—Q—CH_2—CH=CH_2$ dans laquelle Q est choisi dans le groupe constitué par —O—, —S—, —CON<, —COO—, et >NCN.

6. Procédé selon l'une quelconque des revendications 1 à 5, dans lequel on ajoute jusqu'à 1% en poids d'un sel siccatif métallique à la composition pour initier la polymérisation en présence de radicaux libres.

7. Procédé selon l'une quelconque des revendications 1 à 6, dans lequel la copolymérisation a lieu en l'absence d'oxygène.

8. Procédé pour la polymérisation d'une composition de monomère éthyléniquement insaturé et polymérisable en présence de radicaux libres, qui comprend:

A) l'incorporation à cette composition de 2 à 30%, exprimés par rapport aux poids combinés, d'un prépolymérisat obtenu par oxydation, obtenu en mettant en contact le produit de réaction d'un polyol et suffisamment d'éther d'allyle et de glycidyle pour obtenir au moins quatre groupes allyloxy par groupe hydroxy sur le polyol, avec de l'air; et

B) l'activation du prépolymérisat obtenu par oxydation envers une copolymérisation en présence de radicaux libres avec la composition de monomère en utilisant un sel siccatif au cobalt en l'absence d'oxygène.